# EUROPEAN PATENT SPECIFICATION

(11) **EP 3 203 192 B1**
(45) Date of publication and mention of the grant of the patent: **29.06.2022**
(21) Application number: 17154490.1
(22) Date of filing: 02.02.2017
(51) Int. Cl.: G01F 1/26, F24D 19/10, G01F 15/00

(54) **FLOWMETER FOR THERMOHYDRAULIC SYSTEMS**
DURCHFLUSSMESSER FÜR THERMOHYDRAULISCHE SYSTEME
DÉBITMÈTRE POUR SYSTÈMES THERMOHYDRAULIQUES

(30) Priority: 02.02.2016 IT UB20160084
(43) Date of publication of application: 09.08.2017
(73) Proprietor: Pres-Block S.P.A., 10040 Caselette (IT)
(72) Inventor: MONTAGONO, Massimiliano, 10091 Alpignano (IT)
(74) Representative: D'Angelo, Fabio

(56) References cited:
- EP-A1- 3 029 362
- EP-A2- 1 898 134
- WO-A1-2005/111479
- DE-U1- 20 117 196
- US-A1- 2010 307 611

## Description

The present invention concerns a flowmeter, in particular a flowmeter for thermohydraulic systems, preferably the floor or ceiling type, to which the following description will explicitly refer without loss of generality.

The known thermohydraulic systems usually comprise a supply header, to supply the flow of fluid coming from the boiler to the various utilities, and a return header.

The supply header distributes the above-mentioned flow among a plurality of delivery pipes which in turn supply the various utilities.

Since the new generation thermohydraulic systems require accurate regulation of the flow in order to obtain maximum plant efficiency, a flowmeter is generally installed in the supply header, in the area of each delivery pipe, said flowmeter being configured to regulate the flow at the header outlet.

A flowmeter in the known art essentially comprises means for regulating the flow and means for displaying the flow. Generally the means for regulating the flow are rings which regulate the opening of passages for the fluid from the supply header towards the relative delivery pipe.

The flow display means comprise a stem sliding within a transparent cylinder on which a measuring scale is provided. An end part of the stem is immersed in the fluid that flows into the supply header so that it is moved in proportion to the fluid flow, thus allowing measurement of the flow.

Some national regulations require the flowmeters to allow the flow at which they are regulated to be memorized so that said flow can be re-established when necessary. These regulations arise from the fact that it is usually necessary to be able to close a portion of the system in order to carry out maintenance and any technician must be able to re-establish the flow optimized during the installation phase.

In the state of the art flowmeters are known which use more than two rings for regulating and memorizing the flow.

However, said solutions have the drawback of being cumbersome and difficult to produce.

Furthermore, said flowmeters have a regulation such that one revolution of the ring allows regulation of the entire flow, therefore rotation of the ring must be carefully calibrated.

The need is therefore felt to produce a flowmeter compatible with the requirements of the national regulations, which allows fine regulation of the flow and is at the same time compact, easy to assemble and inexpensive.

WO2005/111479 A1 and US 2010/307611 A1 disclose respective flowmeters as defined in the preamble of claim 1.

The object of the present invention is to solve the technical problem described above.

The above-mentioned object is achieved by a flowmeter according to claim 1.

For a better understanding of the present invention, a preferred embodiment thereof is described below, by way of non-limiting example and with reference to the accompanying drawings, in which:
figure 1 is a perspective view of a flowmeter according to the invention;
figures 2, 3 and 4 are longitudinal section views of the flowmeter of figure 1 in different operating conditions; and
figure 5 is a section view of a component of the flowmeter of figure 1.

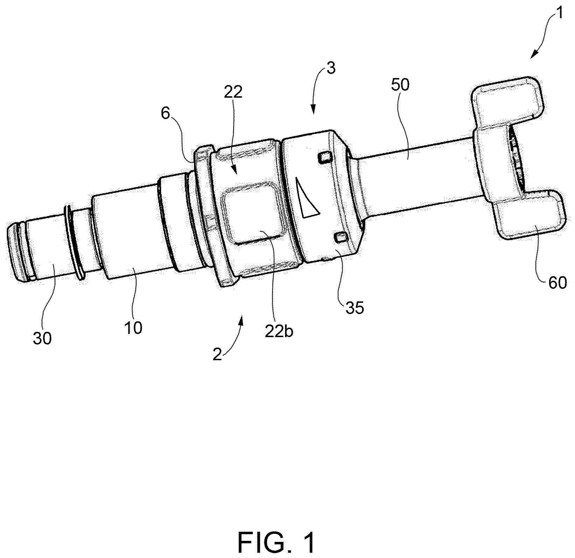

In figures 1 to 4, the number 1 indicates overall a flowmeter according to the invention comprising a main body 2 (or nipple), a carrier 3 inside and coaxial with the main body 2 and a measurement unit 4 carried by the carrier 3 and extending inside the same. Preferably the main body 2, the carrier 3 and the flow measurement unit 4 are axially symmetrical and coaxial around a common axis A.

The main body 2 has a substantially cylindrical shape and comprises a fastening portion 6 configured to be inserted inside a hole 7 of a header 8 of a thermohydraulic circuit. The main body 2 further comprises, an end portion 10 immersed in an operating fluid of the header 8 of the thermohydraulic circuit, connected at the bottom to the fastening portion 6.

Preferably the fastening portion comprises a circular flange 12 extending radially from the main body 2 with respect to the axis A and a threaded portion 11 positioned below the flange 12. The threaded portion 11 has a substantially cylindrical shape and comprises a thread configured to cooperate with an analogous thread obtained on a surface of the hole 7. The threaded portion 11 is separated from the flange 12 by an annular seat 13 obtained to insert a gasket 14.

The main body 2 further comprises an upper portion 16 extending above the flange 12 and having a substantially cylindrical shape. The upper portion 16 comprises two annular portions 17, 18, the annular portion 17 extends above the flange 12 and the portion 18 extends above the portion 17 with respect thereto it has a smaller diameter.

The annular portion 17 comprises an outer surface 17a which is machined to obtain a plurality of grooves 19 having predetermined pitch and depth. The annular portion 18 is surface-machined to define a thread 20.

The central body 2 carries a ring 22 having a diameter substantially equal to that of the flange 12 and extending until it is flush with the portion 18. The ring 22 comprises a lower portion 23 and an upper portion 24 facing the annular portions 17 and 18 of the central body 2.

The lower portion 23 comprises an inner cylindrical surface 23a which is surface-machined to obtain a plurality of grooves 19 complementary to those of the surface 17a. The grooves 19 of the surfaces 17a and 23a form a linearly grooved coupling between the ring 22 and the central body 2 and are configured in such a way as to slide with respect to each other only if a predetermined torque value is exceeded.

The portion 24 comprises an inner surface which is surface-machined to obtain a thread 20 cooperating with that of the annular portion 18. The thread 20 is preferably a single-turn thread configured to allow the ring 22 to move away from the fastening portion 6 of the central body 2, even more preferably the complete travel of the above-mentioned movement takes place in at least two complete revolutions of the ring 22.

The ring 22 comprises an outer surface 22a machined to facilitate gripping by a user, for example it is machined to obtain a plurality of squares 22b in relief with respect to the surface 22a.

The central body 2 is preferably produced in one piece and is made of polymer material, even more preferably a nylon based mixture.

The central body 2 further comprises an internal coaxial cylindrical channel 25 having axis A inside which the carrier 3 is housed.

The carrier 3 has a substantially cylindrical shape and slides freely along the axis A inside the channel 25. The carrier 3 comprises a cylindrical body 30 with dimensions complementary to those of the channel 25 of the main body 2, a threaded portion 32 configured to cooperate with the main body 2 and a terminal head 33 with diameter larger than the channel 25.

The head 33 comprises a ring 35, preferably made in one single piece with the head 33, comprising an outer machined cylindrical surface 35a. For example, it can be surface-machined to provide graphic indications such as the direction of rotation of the ring or to provide elements facilitating gripping by the user.

The threaded portion 32 comprises a thread 36 configured to cooperate with a thread obtained on an inner cylindrical surface 18a of the annular portion 18.

The cylindrical body 30 is hollow and comprises a plurality of openings 40 obtained through the cylindrical wall. Preferably the openings 40 are obtained approximately halfway along the length of the cylindrical body 30 and are equal to one another and arranged in an axially symmetrical manner around the axis A.

The openings 40 allow the passage of a fluid from the inside of a header 8 towards an inner channel 41 inside the cylindrical body 30 and connected to subsequent pipes of the hydraulic circuit by means of known elements.

The cylindrical body 30 further comprises two grooved parts 42 obtained in the vicinity of the openings 40, respectively one above and one below the openings 40, to allow the insertion of a respective seal gasket 43.

The cylindrical body 30 further comprises an annular slit 44 positioned below the lower grooved part 42 and configured to house inside a washer 45 projecting radially from the cylindrical body 30.

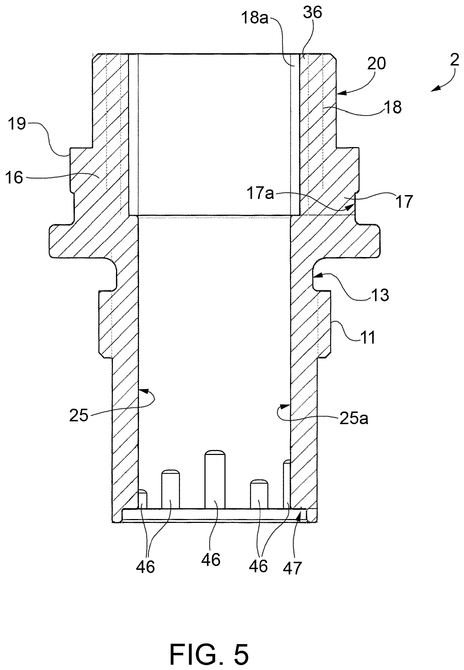

The end portion 10 of the main body 2 comprises a plurality of seats 46 (figure 5). The seats 46 are, for example, substantially rectangular-shaped and obtained inside an inner surface 25a of the channel 25. Preferably the seats 46 are open at the bottom and pass through the lower edge of the end portion 10.

The seats 46 have a different section, preferably the seats 46 comprise a base which is the same for all said seats and a height which differs between at least one of the seats 46 and the other remaining ones. The maximum height development of the seats 46 is defined by the space between the seal gaskets 43.

The lower edge of the end portion 10 further comprises an annular recess 47 configured to house the washer 44.

The measurement unit 4 comprises a transparent cylinder 50 carried by the head 35, a rod 51 and helical spiral spring 52, both inside the cylinder 50. Preferably the cylinder 50 is housed inside a recess 53 obtained in the head 35 and reversibly connected to it by means, for example, of a threaded connection. The cylinder 50 is screen-printed and comprises one or more flow measurement scales on its development along the axis A.

The rod 51 comprises a cap 56 at an upper end thereof and a flange 58 positioned in the vicinity of a lower end thereof. The cap 56 cooperates with the spring 52 which is constrained to a spring holder 57 rigidly connected to the carrier 3.

The rod 51 is free to move vertically within the cylinder 50 between an upper limit position delimited by the cap 56 and a lower limit position defined by the compressed position of the spring 52 between the cap 56 and the spring holder 57. The rod 51 passes sealingly through a channel 59 communicating with the channel 41 of the carrier 3.

Lastly, the cylinder 50 carries, at an upper end thereof and rigidly connected to it, a throttle valve 60 configured to allow, alternatively, rotation of the ring 35 when the latter cannot be easily reached.

The operation of the flowmeter 1 is as follows.

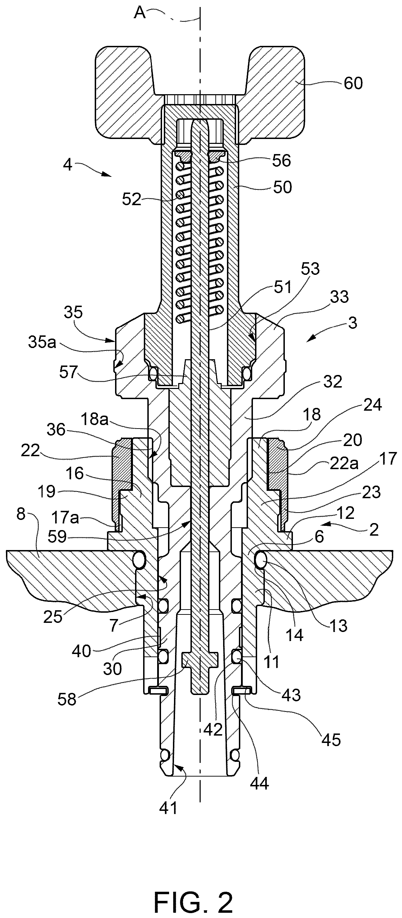

Figure 2 illustrates the flowmeter 1 in a closed condition. By means of the ring 35 the carrier 3 is brought to the maximum distance possible from the fastening portion 6 of the central body 2. In this position the lower seal gasket 43, pressed against the surface 25b of the main body 2, prevents the fluid circulating inside the header 8 from entering through the openings 40. Furthermore, the washer 44 is housed inside the recess 47 and acts as a stop for the carrier 3.

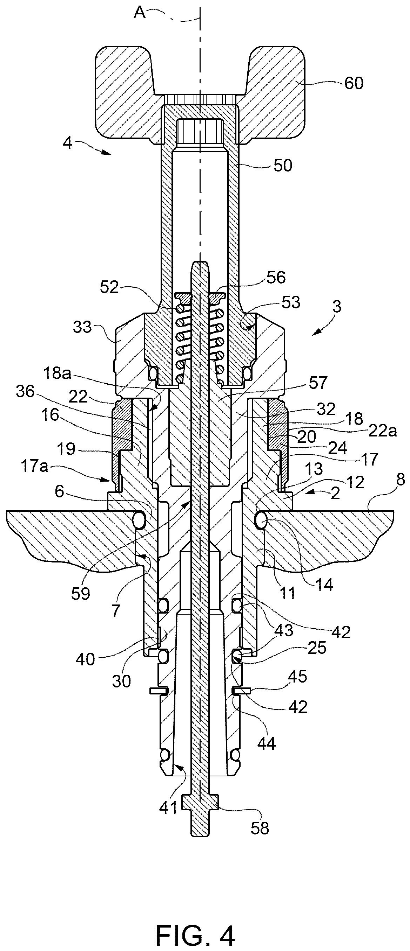

By acting on the ring 35 it is possible to move the carrier 3, bringing the head 33 close to the fastening means 6. Figure 4 shows an operating condition in which the carrier 3 is brought to the minimum distance possible and in which the lower seal gasket 43 is positioned substantially at the same height as the recess 47.

In this condition the seats 46 are totally free and allow passage of the fluid through them towards the openings 40 and through the latter into the channel 25 of the carrier 3.

The flange 58 is dragged by the fluid flow entering the channel 25 and moves the rod 51 vertically downwards. The spring 52 counters the lowering of the rod 51; the level of the cap 56 on the cylinder 50, on which several flow measurement scales are screen-printed, indicates the flow level passing through the flowmeter.

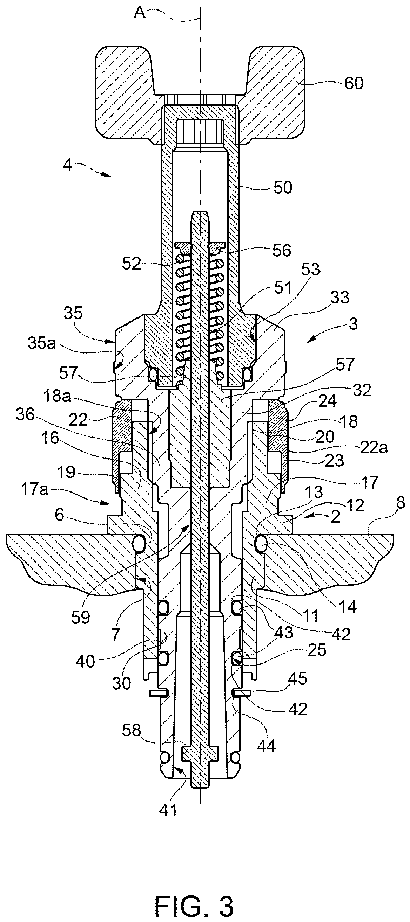

Figure 3 shows a condition of intermediate opening of the flowmeter 1 and memorizing of said opening value.

The carrier 3 is positioned by means of the ring 35 in any intermediate position desired between those illustrated in figures 2 and 4.

Once the flow has been established, the user applies a torque to the ring 22 greater than the predetermined value to slide the linearly grooved coupling between the portion 17 of the central body 2 and the annular portion 23 of the ring 22. As the latter rotates, due to the thread between the portion 18 and the annular portion 24, it moves away from the fastening portion 6 until it touches the head 33 of the carrier 3.

Once the position of the ring 22 is fixed, it is possible to totally close the flow as described previously and then return to the memorized flow value by rotating the ring 35 until the head 33 abuts against the ring 22.

Only by voluntarily applying a torque such as to overcome the sliding torque of the linearly grooved coupling, it is possible to again vary the memorized value which will otherwise remain the same in the case of repeated closings and openings of the flowmeter.

From an examination of the characteristics of the flowmeter according to the present invention, the advantages it offers are evident.

In particular, the flow memorization function is obtained by using one single ring 22 comprising two portions, one of which is threaded and configured to cause the ring to slide on the central portion 2 and the other coupled to the central portion 2 by means of a shaft-hub coupling which slides only when a predetermined torque value is exceeded.

The ring 22, made in one single piece, is therefore compact, inexpensive and easy to produce.

The fact that the carrier 3 closes the fluid flow moving away from the fastening portion 6 allows greater ease of use of the flowmeter 1.

The use of seats 46 having different section allows finer regulation of the fluid flow. Compared to the known solutions, in which one single revolution of the ring allows regulation of the flow between the maximum and minimum values, two or more revolutions of the ring 35 are necessary to regulate the flow of the flowmeter 1 according to the invention.

The machined surface 22a facilitates use by a user, making it easy to rotate the ring 22.

Lastly it is clear that modifications and variations that do not depart from the protective scope defined by the claims can be made to the flowmeter 1 described and illustrated here.

For example, in a solution not according to the present invention, another shaft-hub coupling could be used between the ring 22 and the annular portion 17 with an equivalent function.

Or the seats 46 could have a different shape from the one described or again could have a constant section, with the openings 40 having a section varying from one another.

Again, the carrier 3 could be made in several parts integral with one another.

## Claims

1. A flowmeter (1) comprising a main body (2), a carrier (3), and a measurement unit (4) carried by the carrier (3) and extending inside the same, said main body (2) being configured for insertion into an opening of a header (8) of a thermohydraulic circuit by means of a fastening portion (6), said carrier (3) being inside and coaxial with the main body (2) and being configured to allow the passage of a flow of fluid based on the relative position between said carrier (3) and said main body (2), said flowmeter (1) comprising flow regulating means and flow rate memorizing means, wherein said flow regulating means comprise a first ring (35), said first ring (35) being carried by said carrier (3) and being configured for regulating the position of said carrier (3) with respect to said main body (2) and said memorizing means comprise a second ring (22) carried by said main body (2) and configured to memorize the position of said carrier (3) with respect to said main body (2), said main body (2) comprising an outer surface (17a) cooperating with a respective internal surface (23a) of said second ring (22), wherein said second ring (22) can rotate with respect to said main body (2);
**characterized in that** said rotation of said second ring (22) with respect to said main body (2) takes place by means of a thread (20) obtained between said internal surface (23a) of said second ring (22) and said outer surface (17a) of said main body (2), and **in that** said surfaces (17a, 23a) are machined to further form a linearly grooved splined coupling, so as to allow the rotational sliding of the second ring (22) with respect to the main body (2) when a torque greater than a predetermined value is applied to the former.

2. A flowmeter according to claim 1, wherein the relative movement between said carrier (2) and said main body (2) is vertical and that said flow decreases when said carrier (3) moves away from said fastening portion (6) of said main body (2) .

3. A flowmeter according to claim 1 or 2, wherein said first ring (35) is made in one piece with said carrier (3).

4. A flowmeter according to any of the preceding claims, wherein said main body (2) comprises a plurality of openings (46) configured to allow the passage of said flow of fluid to said carrier (3).

5. A flowmeter according to claim 4, wherein said openings (46) have a substantially rectangular shape and that at least one aperture of said plurality of openings (46) has a different fluid passage section with respect to those of the other openings (46) .

6. A flowmeter according to any of the preceding claims, wherein said main body (2) and said carrier (3) are coaxial, said carrier (3) being inserted in said main body (2) and moving relatively to it by means of a threaded connection (36) defined between an outer surface of the carrier (3) and an internal surface of the main body (2).

7. A flowmeter according to any of the preceding claims, wherein said first and second rings (22, 35) comprise respective outer surfaces (24a, 35a) with a surface treatment to improve the grip of said first and second rings (22, 35).

8. A flowmeter according to any of the preceding claims, wherein said carrier carries means of showing the flow rate.

9. A flowmeter according to any of the preceding claims, wherein the complete regulation of said flow of fluid takes place in at least two revolutions of said carrier (3) with respect to said main body (2).

## Patentansprüche

1. Durchflussmesser (1) mit einem Hauptkörper (2), einem Träger (3) und einer Messeinheit(4), die von dem Träger (3) getragen wird und sich innerhalb desselben erstreckt, wobei der Hauptkörper (2) zum Einsetzen in eine Öffnung eines Kopfes (8) eines thermohydraulischen Kreislaufs mittels eines Befestigungsabschnitts (6) ausgebildet ist, wobei sich der Träger (3) innerhalb des Hauptkörpers (2) und koaxial zum Hauptkörper (2) befindet und derart ausgebildet ist, dass er den Durchfluss eines Fluidstroms auf Basis der relativen Position zwischen dem Träger (3) und dem Hauptkörper (2) zulässt, wobei der Durchflussmesser (1) Durchflussregulierungsmittel und Durchflussmengenspeicherungsmittel umfassen, wobei die Durchflussregulierungsmittel einen ersten Ring (35) umfassen, wobei der erste Ring (35) von dem Träger (3) getragen wird und derart ausgebildet ist, dass er die Position des Trägers (3) in Bezug auf den Hauptkörper (2) reguliert, und die Speicherungsmittel einen zweiten Ring (22) umfassen, der von dem Hauptkörper (2) getragen wird und so ausgebildet ist, dass er die Position des Trägers (3) in Bezug auf den Hauptkörper (2) speichert, wobei der Hauptkörper (2) eine Außenfläche (17a) umfasst, die mit einer entsprechenden Innenfläche (23a) des zweiten Rings (22) zusammenwirkt, wobei der zweite Ring (22) in Bezug auf den Hauptkörper (2) rotieren kann;
**dadurch gekennzeichnet, dass** die Drehung des zweiten Rings (22) in Bezug auf den Hauptkörper (2) mittels eines Gewindes (20) erfolgt, das zwischen der Innenfläche (23a) des zweiten Rings (22) und der Außenfläche (17a) des Hauptkörpers (2) aufgenommen ist, und dass die Flächen (17a, 23a) so bearbeitet sind, dass sie ferner eine linear gerillte Keilverbindung bilden, um das drehende Gleiten des zweiten Rings (22) in Bezug auf den Hauptkörper (2) zu ermöglichen, wenn ein Drehmoment, das größer als ein vorbestimmter Wert ist, auf den ersteren angewendet wird.

2. Durchflussmesser nach Anspruch 1, wobei die Relativbewegung zwischen dem Träger (3) und dem Hauptkörper (2) vertikal vorgesehen ist und der Durchfluss abnimmt, wenn sich der Träger (3) von dem Befestigungsabschnitt (6) des Hauptkörpers (2) entfernt.

3. Durchflussmesser nach Anspruch 1 oder 2, wobei der erste Ring (35) einteilig mit dem Träger (3) hergestellt ist.

4. Durchflussmesser nach einem der vorangegangenen Ansprüche, wobei der Hauptkörper (2) eine Vielzahl an Öffnungen (46) umfasst, die dazu ausgebildet sind, dass sie den Durchgang des Fluidstroms zum Träger (3) ermöglichen.

5. Durchflussmesser nach Anspruch 4, wobei die Öffnungen (46) eine im Wesentlichen rechteckige Form aufweisen, und dass eine Öffnung der Vielzahl an Öffnungen (46) einen unterschiedlichen Fluiddurchgangsabschnitt in Bezug auf die anderen Öffnungen (46) aufweist.

6. Durchflussmesser nach einem der vorangegangenen Ansprüche, wobei der Hauptkörper (2) und der Träger (3) koaxial ausgebildet sind, wobei der Träger (3) in den Hauptkörper (2) eingesetzt ist und sich relativ zu diesem mittels einer Gewindeverbindung (36) bewegt, die zwischen einer Außenfläche des Trägers (3) und einer Innenfläche des Hauptkörpers (2) definiert ist.

7. Durchflussmesser nach einem der vorangegangenen Ansprüche, wobei die ersten und zweiten Ringe (22, 35) jeweils eine Außenfläche (24a, 35a) mit einer Oberflächenbehandlung zur Verbesserung der Griffigkeit der ersten und zweiten Ringe (22, 35) aufweisen.

8. Durchflussmesser nach einem der vorangegangenen Ansprüche, wobei der Träger Mittel zur Anzeige der Durchflussmenge trägt.

9. Durchflussmesser nach einem der vorangegangenen Ansprüche, wobei die vollständige Regulierung des Fluidstroms in zumindest zwei Umdrehungen des Trägers (3) in Bezug auf den Hauptkörper (2) stattfindet.

## Revendications

1. Débitmètre (1) comprenant un corps principal (2), un support (3) et un module de mesure (4) porté par le support (3) et s'étendant à l'intérieur de celui-ci, ledit corps principal (2) étant configuré pour s'insérer dans une ouverture d'un collecteur (8) d'un circuit thermohydraulique au moyen d'une partie de fixation (6), ledit support (3) se trouvant à l'intérieur du corps principal (2) et coaxial à celui-ci et étant configuré pour permettre le passage d'un écoulement de fluide à partir de la position relative entre ledit support (3) et ledit corps principal (2), ledit débitmètre (1) comprenant des moyens de régulation du débit et des moyens de mémorisation du débit, dans lequel lesdits moyens de régulation du débit comprennent un premier anneau (35), ledit premier anneau (35) étant porté par ledit support (3) et étant configuré pour réguler la position dudit support (3) par rapport audit corps principal (2) et lesdits moyens de mémorisation comprennent un second anneau (22) porté par ledit corps principal (2) et configuré pour mémoriser la position dudit support (3) par rapport audit corps principal (2), ledit corps principal (2) comprenant une surface externe (17a) coopérant avec une surface interne respective (23a) dudit second anneau (22), dans lequel ledit second anneau (22) peut tourner par rapport audit corps principal (2) ;
**caractérisé en ce que** ladite rotation dudit second anneau (22) par rapport audit corps principal (2) s'effectue au moyen d'un filetage (20) obtenu entre ladite surface interne (23a) dudit second anneau (22) et ladite surface externe (17a) dudit corps principal (2) et **en ce que** lesdites surfaces (17a, 23a) sont usinées pour former en outre un accouplement à cannelures linéaires, pour permettre le coulissement rotationnel du second anneau (22) par rapport au corps principal (2) quand un couple supérieur à une valeur prédéterminée est appliqué à ce dernier.

2. Débitmètre selon la revendication 1, dans lequel le mouvement relatif entre ledit support (2) et ledit corps principal (2) est vertical et ledit écoulement diminue quand ledit support (3) s'éloigne de ladite partie de fixation (6) dudit corps principal (2).

3. Débitmètre selon la revendication 1 ou 2, dans lequel ledit premier anneau (35) est réalisé de manière monolithique avec ledit support (3).

4. Débitmètre selon l'une quelconque des revendications précédentes, dans lequel ledit corps principal (2) comprend plusieurs ouvertures (46) configurées pour permettre le passage dudit écoulement de fluide vers ledit support (3).

5. Débitmètre selon la revendication 4, dans lequel lesdites ouvertures (46) présentent une forme sensiblement rectangulaire et au moins une ouverture desdites plusieurs ouvertures (46) présente une section de passage de fluide différente de celle des autres ouvertures (46).

6. Débitmètre selon l'une quelconque des revendications précédentes, dans lequel ledit corps principal (2) et ledit support (3) sont coaxiaux, ledit support (3) étant inséré dans ledit corps principal (2) et se déplaçant par rapport à celui-ci au moyen d'une liaison filetée (36) définie entre une surface externe du support (3) et une surface interne du corps principal (2).

7. Débitmètre selon l'une quelconque des revendications précédentes, dans lequel lesdits premier et second anneaux (22, 35) comprennent des surfaces externes respectives (24a, 35a) présentant un traitement de surface pour améliorer la préhension desdits premier et second anneaux (22, 35).

8. Débitmètre selon l'une quelconque des revendications précédentes, dans lequel ledit support porte des moyens permettant de visualiser le débit.

9. Débitmètre selon l'une quelconque des revendications précédentes, dans lequel la régulation complète dudit écoulement de fluide s'effectue en au moins deux révolutions dudit support (3) par rapport audit corps principal (2).
